# EUROPEAN PATENT APPLICATION

(11) **EP 4 166 740 A1**
(43) Date of publication of application: **19.04.2023**
(21) Application number: 22190878.3
(22) Date of filing: 17.08.2022
(51) Int. Cl.: E05D 3/02, E05D 5/02, E05D 7/081, F25D 23/02

(54) **HINGE ASSEMBLY FOR A VACUUM INSULATED DOOR**

(30) Priority: 13.10.2021 US 202117500141
(71) Applicant: Whirlpool Corporation, Benton Harbor, MI 49022 (US)
(72) Inventor: Hunter, Lynne Foster, 21024 Cassinetta di Biandronno (VA) (IT); Karl, Jackson Felipe, 21024 Cassinetta di Biandronno (VA) (IT); Naik, Abhay, 21024 Cassinetta di Biandronno (VA) (IT); Phalak, Sanket Vivek, 21024 Cassinetta di Biandronno (VA) (IT)
(74) Representative: Spina, Alessandro

(57) **Abstract**

A hinge assembly (20) for a vacuum insulated door (12) includes a hinge plate (22) that defines an aperture (24), and a bracket (26) has a body (28) and is configured to be welded with the vacuum insulated door (12). A hinge pin (36) is operably coupled to the body (28) of the bracket (26) and rotatably coupled within the hinge plate (22). A bushing (90) is disposed within the aperture (24) defined by the hinge plate (22) and rotatably coupled to the hinge pin (36).

## Description

### BACKGROUND OF THE DISCLOSURE

The present disclosure generally relates to a vacuum insulated door, and more specifically, to a hinge assembly for a vacuum insulated door.

### SUMMARY OF THE DISCLOSURE

According to one aspect of the present disclosure, an appliance includes a vacuum insulated door that is coupled to a cabinet. The vacuum insulated door includes a wrapper and a liner. The appliance further includes a hinge assembly that is operably coupled to the vacuum insulated door and the cabinet. The hinge assembly includes a hinge plate that is operably coupled to the cabinet and defines an aperture. The hinge assembly further includes a bracket that is coupled to the wrapper of the vacuum insulated door and includes a body and a receiving member. The receiving member extends along a side of the body and defines a channel. A pin is disposed within the aperture of the hinge plate and is positioned within the channel of the receiving member to operably couple the bracket to the hinge plate.

According to another aspect of the present disclosure, an appliance includes a vacuum insulated door and a hinge assembly including a hinge plate that has an extension that defines an aperture, a bracket that includes a hinge pin integrally formed with a body of the bracket and rotatably coupled to the hinge plate within the aperture of the hinge plate, and a bushing that is disposed within the aperture of the hinge plate and rotatably coupled to the hinge pin of the bracket.

According to yet another aspect of the present disclosure, a hinge assembly for a vacuum insulated door includes a hinge plate that defines an aperture. A bracket has a body and is configured to be welded with the vacuum insulated door. A hinge pin is operably coupled to the body of the bracket and rotatably coupled within the hinge plate. A bushing is disposed within the aperture defined by the hinge plate and rotatably coupled to the hinge pin.

A hinge assembly set forth herein is configured to couple a vacuum insulated door to an appliance cabinet. A bracket of the hinge assembly is welded or otherwise fixedly coupled with the vacuum insulated door to maintain the integrity of the vacuum insulated door while securely coupling the door to the cabinet. A hinge pin may be welded with the bracket to further secure the door. Additionally or alternatively, the hinge pin may be positioned within a receiving member that can either be integrally formed with the bracket or be welded to the bracket. The unitary configuration of the receiving member and/or the hinge pin and the bracket minimizes overall manufacturing costs and maximizes the useful life of the vacuum insulated structure by minimizing engagement with the vacuum insulated door.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front perspective view of an appliance of the present disclosure;
FIG. 2 is a front perspective view of a vacuum insulated door of the present disclosure with hinge assemblies;
FIG. 3 is a top perspective exploded view of hinge assemblies of the present disclosure with first and second hinge plates, brackets, and hinge pins;
FIG. 4 is an enlarged partial top perspective view of a hinge assembly of the present disclosure;
FIG. 5 is a top perspective view of a bracket with a receiving member of the present disclosure;
FIG. 6 is a front perspective view of a vacuum insulated door of the present disclosure with hinge assemblies;
FIG. 7 is a top perspective exploded view of hinge assemblies of the present disclosure with a hinge pin, a bracket, and first and second hinge plates;
FIG. 8 is an enlarged partial side perspective view of a hinge assembly of the present disclosure;
FIG. 9 is an exploded side perspective view of a hinge pin and receiving member of the present disclosure;
FIG. 10 is a front perspective view of a vacuum insulated door of the present disclosure with hinge assemblies;
FIG. 11 is an exploded top perspective view of hinge assemblies of the present disclosure with a hinge pin, a bracket, and first and second hinge plates; and
FIG. 12 is a side perspective view of a hinge pin welded to a bracket of the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a hinge assembly for a vacuum insulated door. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

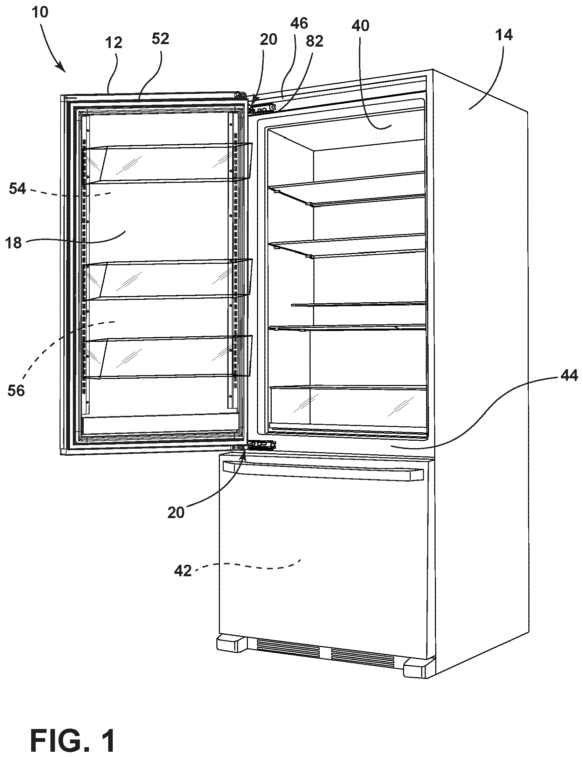

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

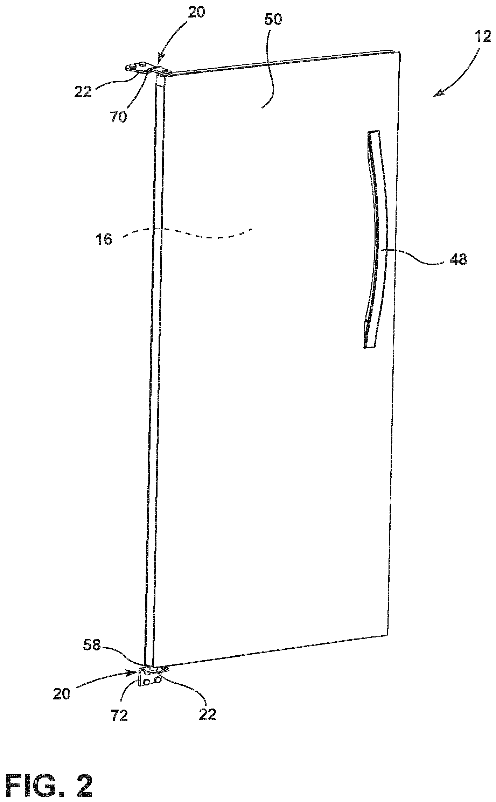

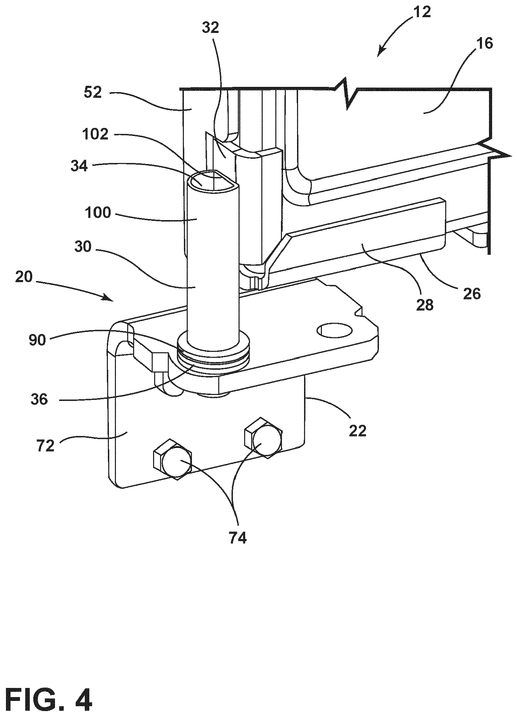

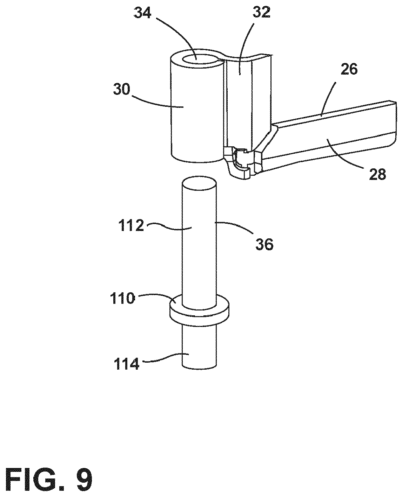

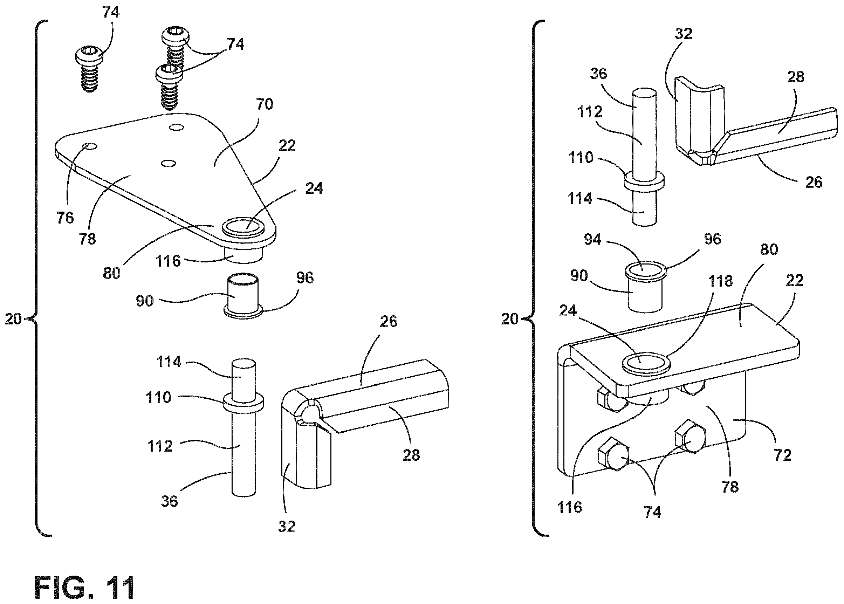

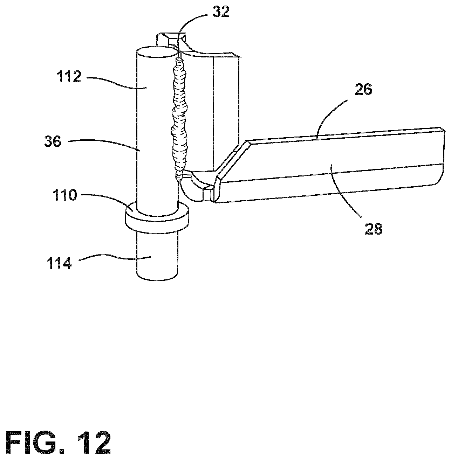

Referring to FIGS. 1-12, reference numeral 10 generally designates an appliance 10 including a vacuum insulated door 12 that is coupled to a cabinet 14. The vacuum insulated door 12 includes a wrapper 16 and a liner 18. A hinge assembly 20 is coupled to the vacuum insulated door 12 and the cabinet 14. The hinge assembly 20 includes a hinge plate 22 that is operably coupled to the cabinet 14 and defines an aperture 24. A bracket 26 is coupled to the wrapper 16 of the vacuum insulated door 12 and includes a body 28 and a receiving member 30. The receiving member 30 extends along a side 32 of the body 28 and defines a channel 34. A pin 36 is disposed within the aperture 24 of the hinge plate 22 and is positioned within the channel 34 of the receiving member 30 to operably couple the bracket 26 to the hinge plate 22.

Referring now to FIGS. 1-3, the appliance 10 is illustrated as a refrigerating appliance. It is also contemplated that the hinge assembly 20 may be utilized in other various appliances including, but not limited to, refrigerators, freezers, coolers, and other similar appliances within household and commercial settings. The appliance 10 includes the cabinet 14, which includes a refrigerating compartment 40 and a freezer compartment 42 separated by a mullion 44. The vacuum insulated door 12 is coupled to the cabinet 14 via the hinge assembly 20. By way of example, not limitation, the hinge plate 22 is coupled to a top 46 of the cabinet 14 and to the mullion 44. The vacuum insulated door 12 is hingedly coupled to the cabinet 14 via the hinge assembly 20 and is operable between an open position and a closed position.

The vacuum insulated door 12 also includes a handle 48 that is operably coupled to an outer surface 50 of the vacuum insulated door 12. The handle 48 can be utilized to translate the vacuum insulated door 12 about the hinge assembly 20 between the open and closed positions. As mentioned above, the vacuum insulated door 12 includes the wrapper 16 and the liner 18, which are coupled together via a trim breaker 52. The bracket 26 of the hinge assembly 20 can be positioned on the wrapper 16 proximate to the trim breaker 52. Both the wrapper 16 and the liner 18 may be formed from metals, polymers, metal alloys, combinations thereof, and other substantially rigid materials that can be used for vacuum insulated structures within appliances.

Referring still to FIGS. 1-3, an insulation cavity 54 may be defined between the liner 18 and the wrapper 16, and insulation materials 56 may be disposed within the insulation cavity 54. The insulation materials 56 may be a glass type material, a carbon-based powder, silicone oxide based materials, insulating gases, and other standard insulation materials practicable for use in a vacuum insulated door 12. The insulation materials 56 substantially fill the insulation cavity 54 to form a substantially continuous layer between the liner 18 and the wrapper 16. The insulation cavity 54 is evacuated to at least partially define a vacuum within the insulation cavity 54 to ultimately define the vacuum insulated door 12.

With reference now to FIGS. 1-5, the bracket 26 of the hinge assembly 20 is coupled to a corner 58 of the vacuum insulated door 12 and the hinge plate 22, as mentioned above, is operably coupled to the cabinet 14. The hinge plate 22 may include a first hinge plate 70 and a second hinge plate 72. For example, the first hinge plate 70 is coupled to the top 46 of the cabinet 14, and the second hinge plate 72 is coupled to the mullion 44 of the cabinet 14. The hinge plate 22 is coupled to the cabinet 14 via fasteners 74 that extend through holes 76 defined by the hinge plate 22. The hinge plate 22 includes an attachment portion 78 and an extension 80, and the extension 80 defines the aperture 24, as described in more detail below. It is generally contemplated that the first hinge plate 70 may be generally flat and/or planar and can at least partially extend over an edge 82 of the appliance 10. It is further contemplated that each of the first and second hinge plates 70, 72 may have a bend 84, such that the extension 80 outwardly extends from the cabinet 14. The extension 80 of the second hinge plate 72 may be generally perpendicular to the mullion 44 of the cabinet 14 at the bend 84 of the second hinge plate 72. It is also contemplated that the extension 80 of the first hinge plate 70 may be offset from the attachment portion 78 via the bend 84 of the first hinge plate 70.

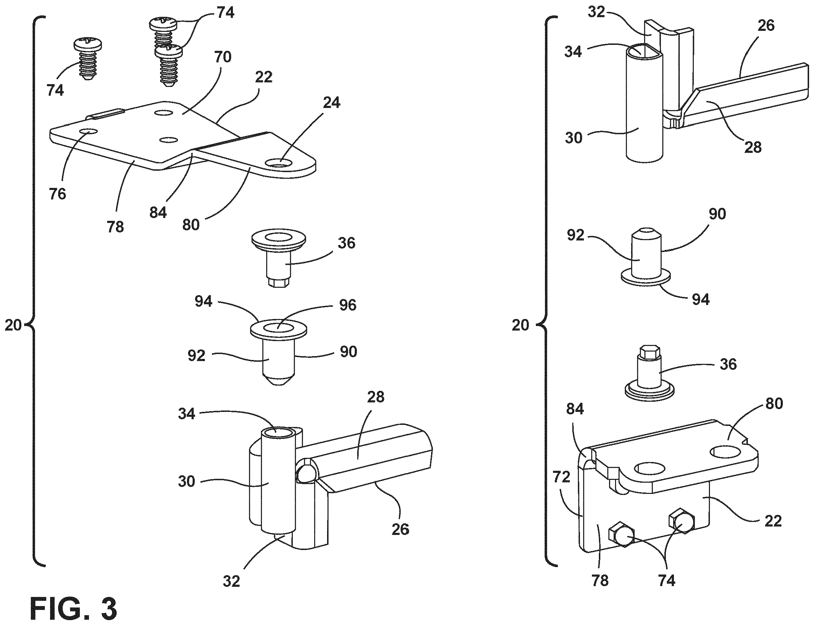

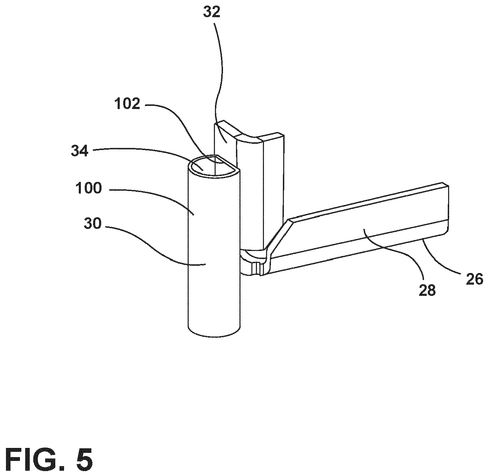

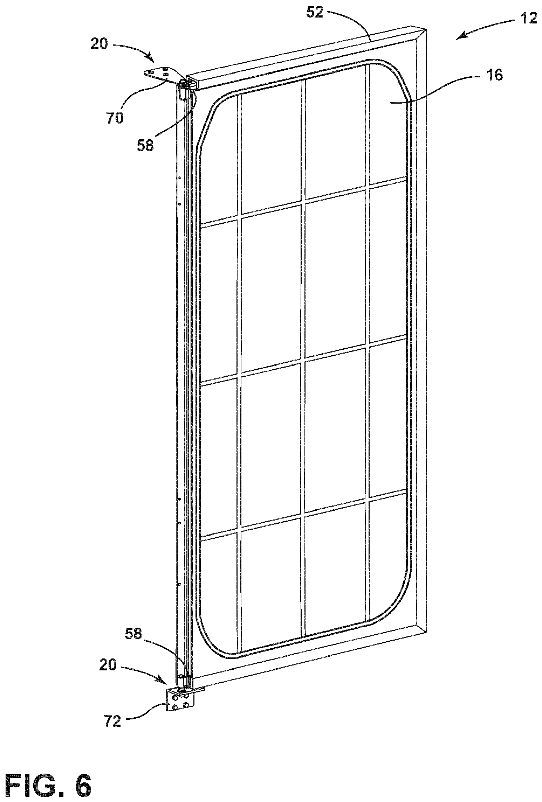

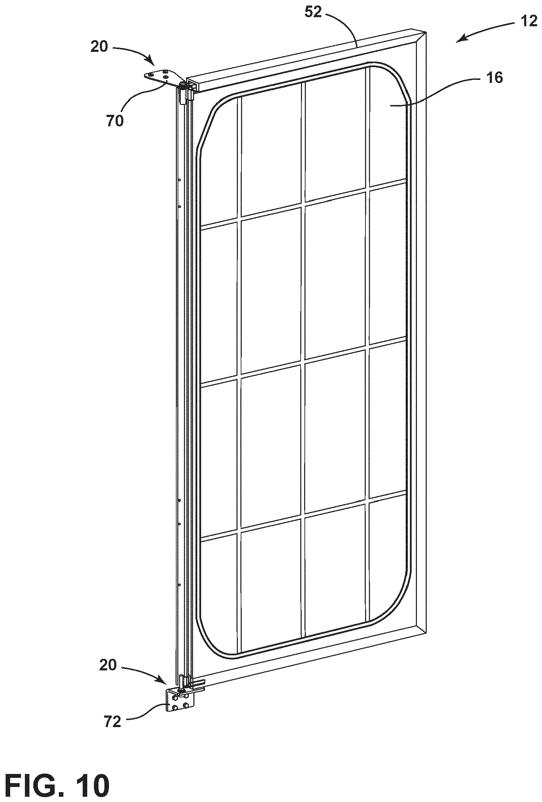

The extension 80 of the hinge plate 22 defines the aperture 24 in which the pin 36 of the hinge assembly 20 can be disposed. The hinge assembly 20 also includes a bushing 90 that is operably coupled to the pin 36. As illustrated in FIG. 5, the bushing 90 is disposed over the pin 36, which is fixed within the aperture 24 of the hinge plate 22. The bushing 90 has sidewalls 92 having a perimeter edge 94 that defines an opening 96 in which the pin 36 is disposed. A first configuration of the hinge assembly 20 is illustrated in FIGS. 3-5 in which the pin 36 is coupled to the hinge plate 22, and the bushing 90 is disposed within the receiving member 30 of the bracket 26. A second configuration of the hinge assembly 20 is illustrated in FIGS. 6-9 in which the pin 36 is disposed within the receiving member 30, and the bushing 90 is positioned within the aperture 24 of the hinge plate 22 to receive the pin 36. A third configuration of the hinge assembly 20 is illustrated in FIGS. 10-12 in which the pin 36 is fixedly coupled to the bracket 26, and the bushing 90 is positioned within the aperture 24 of the hinge plate 22 to receive the pin 36. It is generally contemplated that in any one of these configurations the pin 36 may be referred to as a hinge pin 36.

With reference now to FIGS. 3-5, the hinge pin 36 may be coupled to the extension 80 of the hinge plate 22 and extend toward the receiving member 30 of the bracket 26. In such configuration, the bushing 90 is positioned within the channel 34 defined by the receiving member 30 between the receiving member 30 and the hinge pin 36. The bushing 90 is configured to assist in the fluid translation of the receiving member 30 and the vacuum insulated door 12 about the hinge pin 36 to rotate the vacuum insulated door 12. It is generally contemplated that the hinge pin 36 may extend through and/or be positioned within the aperture 24 defined by the hinge plate 22. Additionally or alternatively, the hinge pin 36 may be integrally formed with the hinge plate 22. The hinge pin 36 can be positioned within the opening 96 of the bushing 90, and the bushing 90 may rotate within the channel 34 of the receiving member 30.

In this configuration, the bushing 90 is fixed to the hinge pin 36 and positioned within the channel 34 of the receiving member 30. The bushing 90 assists in minimizing rotational friction between the bracket 26 and the hinge pin 36 during rotation of the vacuum insulated door 12. The hinge pin 36 and the receiving member 30 can each be formed of a metal material, such that absent the bushing 90 frictional build-up between the hinge pin 36 and the receiving member 30 during rotation of the vacuum insulated door 12 may occur. As illustrated in FIG. 5, the receiving member 30 is welded and/or otherwise fixedly coupled with the side 32 of the bracket 26.

Referring still to FIGS. 3-5, each of the bracket 26 and the receiving member 30 are formed of a metal material, such that the bracket 26 can be welded with the wrapper 16 and the receiving member 30 can be welded with the bracket 26. The welding of each of the bracket 26 and the receiving member 30 increases the strength of the vacuum insulated door 12, as the metal bracket 26 may strengthen the corner 58 of the vacuum insulated door 12 where attached. Added metal parts, such as the bracket 26, can assist in sealing the insulation cavity 54 to maintain the at least partial vacuum over time. Stated differently, the welded bracket 26 may assist in increasing the overall useful life of the vacuum insulated door 12.

It is generally contemplated that the receiving member 30 may have a curved portion 100 and a linear portion 102 that define the channel 34. The channel 34 is configured to be larger than a diameter of the bushing 90, such that the receiving member 30 can rotate about the bushing 90 and the hinge pin 36. The linear portion 102 is configured to be welded with the side 32 of the bracket 26. Once welded, the linear portion 102 of the receiving member 30 may form a unitary construction with the side 32 of the bracket 26. The curved portion 100 is configured to assist in the rotational engagement with the bushing 90 to minimize frictional engagement while simultaneously providing controlled rotation of the vacuum insulated door 12 about the bushing 90 and the hinge pin 36. The curved portion 100 defines the channel 34 to the extent that the receiving member 30 may rotate about the bushing 90. It is generally contemplated that the bushing 90 fits snug within the channel 34.

Referring still to FIGS. 3-5, the receiving member 30 may be positioned along the body 28 of the bracket 26 at any practicable location, preferably along a side thereof. The separate coupling, via welding or other attachment methods, provides flexibility in assembling the vacuum insulated door 12 with the cabinet 14 (FIG. 1). For example, the receiving member 30 may be adjusted relative the bracket 26 during manufacturing depending on the size, configuration, and/or orientation of the vacuum insulated door 12 and the cabinet 14 of the appliance 10. As mentioned above, the receiving member 30 can be adjusted and sized to fit a particular appliance 10 to couple the vacuum insulated door 12 with the cabinet 14. The linear portion 102 of the receiving member 30 can be welded to the body 28 of the bracket 26 as each of the receiving member 30 and the bracket 26 may be formed from a metal material. The bracket 26 can also be welded to the vacuum insulated door 12 to maximize the overall integrity and useful life of the vacuum insulated door 12.

With reference now to FIGS. 6-9, the receiving member 30 is integrally formed with the body 28 of the bracket 26. As used herein, the terms integrally formed refer to the receiving member 30 and the bracket 26 being a single unitary construction, such that the bracket 26 and the receiving member 30 are a monolithic structure. Stated differently, the receiving member 30 is configured as an extension of the bracket 26, such that the side 32 of the bracket 26 is bent to define the receiving member 30.

In this alternate configuration, the side 32 of the body 28 of the bracket 26 can be manipulated during manufacturing to define the receiving member 30 and the channel 34. The side 32 of the bracket 26 can be bent to define the curved portion 100 of the receiving member 30. The side 32 is wrapped to define the channel 34 and the curved portion 100 of the receiving member 30 and may be welded or otherwise fixedly coupled with the body 28 of the bracket 26. The hinge pin 36 can then be positioned within the receiving member 30 to ultimately rotatably couple the vacuum insulated door 12 with the hinge plate 22 and the cabinet 14 (FIG. 1).

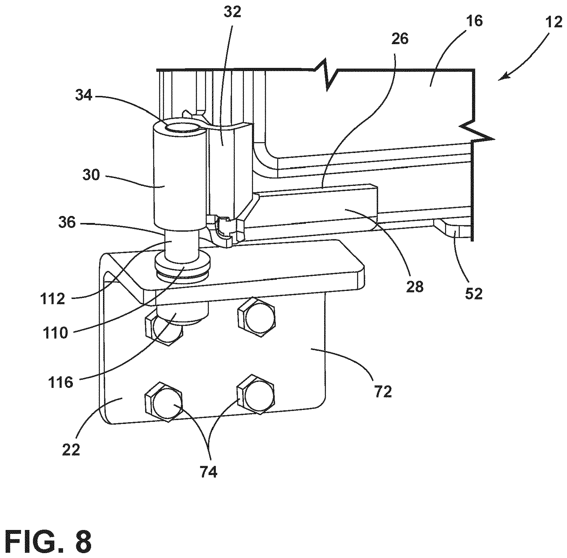

The hinge pin 36 is illustrated in FIG. 8 as being positioned directly within the channel 34 of the receiving member 30, and the bushing 90 is positioned within the aperture 24 of the hinge plate 22. The hinge pin 36 is illustrated with a bearing flange 110 that rotatably engages the perimeter edge 94 of the bushing 90. The bearing flange 110 defines a bracket end 112 and a plate end 114 of the hinge pin 36. The bracket end 112 of the hinge pin 36 may be configured to define a compact fit within the channel 34 of the receiving member 30, such that the bracket end 112 may be fixedly positioned within the receiving member 30. The plate end 114 of the hinge pin 36 is positioned within the bushing 90 and is configured to rotate within the bushing 90. The plate end 114 rotates within the bushing 90 to fluidly rotate the vacuum insulated door 12 between the open and closed positions. In this configuration the bushing 90 minimizes the frictional interference between the plate end 114 of the hinge pin 36 and the hinge plate 22.

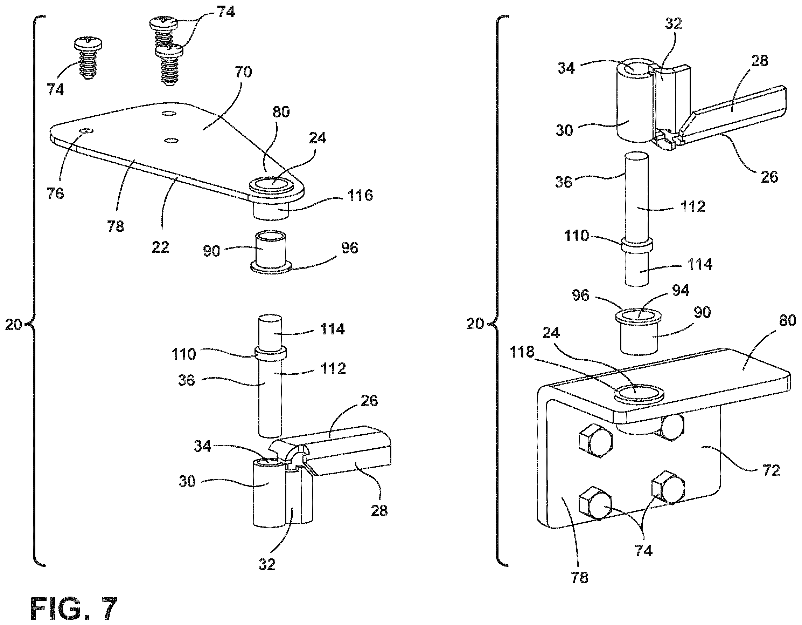

With further reference to FIGS. 6-9, the hinge plate 22 may also include a housing 116 in which the bushing 90 may be positioned. The housing 116 defines the aperture 24 in which the bushing 90 and the hinge pin 36 are disposed. As illustrated in FIG. 7, the housing 116 of the first hinge plate 70 extends toward the hinge pin 36 and the receiving member 30, and the housing 116 of the second hinge plate 72 extends away from the hinge pin 36 and the receiving member 30. The perimeter edge 94 of the bushing 90 can engage with an upper rim 118 of the housing 116, and the hinge pin 36 can rotate within the bushing 90. Additionally or alternatively, the bushing 90 and the hinge pin 36 may rotate within the housing 116, such that the bushing 90 may be fixedly coupled with the hinge pin 36. In either configuration, the bushing 90 minimizes potential friction between the hinge pin 36 and the hinge plate 22.

Referring still to FIGS. 6-9, the bearing flange 110 may further assist in the rotation of the hinge pin 36 relative the hinge plate 22 by fluidly and rotatably engaging with the perimeter edge 94 of the bushing 90. The bearing flange 110 may also assist during assembly of the bracket 26, such that the bracket end 112 of the hinge pin 36 can be positioned within the receiving member 30 up to the bearing flange 110. As mentioned above, the hinge pin 36 may be fixedly coupled with the receiving member 30. The positioning of the hinge pin 36 directly in the channel 34 of the receiving member 30 may minimize the movement of the hinge pin 36 relative the bracket 26. The minimized movement of the hinge pin 36 within and relative the receiving member 30 can assist in maximizing and extending the overall useful life of the vacuum insulated door 12 by minimizing rotational strain on the bracket 26 via the receiving member 30.

Referring now to FIGS. 10-12, the hinge pin 36 is illustrated as being directly coupled to the side 32 of the bracket 26. In this configuration, the bracket 26 is free from the receiving member 30, such that the hinge pin 36 is fixed directly to the bracket 26. By way of example, not limitation, it is generally contemplated that the hinge pin 36 may be welded to the bracket 26. The hinge pin 36 can include the bearing flange 110, which separates the hinge pin 36 to define the bracket end 112 and the plate end 114. The bracket end 112 may be welded or otherwise fixed with the bracket 26 along any portion of the side 32 of the bracket 26. The length of the bracket end 112 of the hinge pin 36 provides a range of positions at which the hinge pin 36 can be coupled with the bracket 26.

The bearing flange 110 engages the perimeter edge 94 of the bushing 90 in an assembled position of the hinge assembly 20. The bearing flange 110 assists in the rotation of the vacuum insulated door 12 relative the hinge plate 22. As discussed above with respect to FIGS. 6-9, the bushing 90 of FIGS. 10-12 also receives the hinge pin 36 to couple the bracket 26 to the hinge plate 22. The hinge pin 36 can rotate within the bushing 90 to translate the vacuum insulated door 12 between the open and closed positions. The direct coupling of the hinge pin 36 maximizes the positioning of the hinge pin 36 along the bracket 26 in addition to the length of the bracket end 112. The hinge pin 36 may be utilized with vacuum insulated doors 12 of various sizes and shapes given the length of the bracket end 112 to provide the varied placement of the hinge pin 36 along the bracket 26.

With further reference to FIGS. 10-12, the hinge pin 36 being coupled to the side 32 of the bracket 26 can also minimize manufacturing costs by reducing the addition of the receiving member 30. Additionally or alternatively, the hinge pin 36 may be integrally formed with the bracket 26. Stated differently, the bracket end 112 of the hinge pin 36 may be formed as a uniform, monolithic structure with the side 32 of the bracket 26. Regardless of whether the hinge pin 36 is welded or integrally formed with the bracket 26, the overall useful life of the vacuum insulated door 12 may be extended as a result of the strength of coupling between the hinge pin 36 and the bracket 26. As mentioned above, the bracket 26 may be welded to the vacuum insulated door 12, which minimizes the strain placed on the vacuum insulated door 12 during use and helps strengthen the corners 58 of the vacuum insulated door 12 to assist in maintaining the at least partial vacuum.

Referring to FIGS. 1-12, in any one of the configurations outlined herein, the hinge assembly 20 extends the overall useful life of the vacuum insulated door 12. In particular, the integral formation of either the receiving member 30 and/or the hinge pin 36 can further strengthen the vacuum insulated door 12 by minimizing the number of separately moving parts. Regardless of integral formation, the use of welding or other methods of securely fixing the receiving member 30 to the bracket 26 can strengthen both the bracket 26 and the vacuum insulated door 12. The hinge assembly 20 assists in maintaining the at least partial vacuum by welding the brackets 26 to the corners 58 of the vacuum insulated door 12 and while also providing the ability to couple the vacuum insulated door 12 with the cabinet 14 of the appliance 10.

The invention disclosed herein is further summarized in the following paragraphs and is further characterized by combinations of any and all of the various aspects described therein.

According to one aspect of the present disclosure, an appliance includes a vacuum insulated door that is coupled to a cabinet. The vacuum insulated door includes a wrapper and a liner. The appliance further includes a hinge assembly that is operably coupled to the vacuum insulated door and the cabinet. The hinge assembly includes a hinge plate that is operably coupled to the cabinet and defines an aperture. The hinge assembly further includes a bracket that is coupled to the wrapper of the vacuum insulated door and includes a body and a receiving member. The receiving member extends along a side of the body and defines a channel. A pin is disposed within the aperture of the hinge plate and is positioned within the channel of the receiving member to operably couple the bracket to the hinge plate.

According to another aspect, a body of a bracket is welded to a wrapper.

According to another aspect, a hinge plate further includes a bushing that defines an opening, and a pin is disposed within the opening.

According to another aspect, a bushing is disposed within a channel of a receiving member.

According to another aspect, a bushing is disposed within an aperture of a hinge plate.

According to another aspect, a pin includes a bearing flange.

According to another aspect, a bearing flange of a pin is operably coupled to a perimeter edge of a receiving member, and the pin is rotatably coupled with the receiving member.

According to another aspect of the present disclosure, an appliance includes a vacuum insulated door and a hinge assembly including a hinge plate that has an extension that defines an aperture, a bracket that includes a hinge pin integrally formed with a body of the bracket and rotatably coupled to the hinge plate within the aperture of the hinge plate, and a bushing that is disposed within the aperture of the hinge plate and rotatably coupled to the hinge pin of the bracket.

According to another aspect, a hinge pin includes a bearing flange that is operably and rotatably coupled to a bushing.

According to another aspect, a vacuum insulated door includes a wrapper, and a bracket is welded to the wrapper.

According to another aspect, a hinge pin is fixed relative a bracket and is rotatably coupled within an aperture of a hinge plate.

According to another aspect, a bushing is positioned between a hinge pin and a hinge plate, and the hinge pin is rotatable within the bushing relative to the hinge plate.

According to another aspect, an appliance further includes a cabinet. A hinge plate is coupled to the cabinet via fasteners.

According to another aspect, a vacuum insulated door is coupled to a cabinet via a hinge assembly.

According to yet another aspect of the present disclosure, a hinge assembly for a vacuum insulated door includes a hinge plate that defines an aperture, and a bracket has a body and is configured to be welded with said vacuum insulated door. A hinge pin is operably coupled to the body of the bracket and rotatably coupled within the hinge plate. A bushing is disposed within the aperture defined by the hinge plate and rotatably coupled to the hinge pin.

According to another aspect, a hinge pin is welded to a body of a bracket.

According to another aspect, a bracket further includes a receiving member that is welded to a body of the bracket, and a hinge pin is rotatably coupled to the bracket via the receiving member.

According to another aspect, a hinge pin includes a bearing flange that is rotatably engageable with a bushing.

According to another aspect, a hinge pin and a bracket are configured to be welded to a wrapper of said vacuum insulated door.

According to another aspect, a hinge assembly further includes a receiving member that is coupled to a body of a bracket and defines a channel. The receiving member is integrally formed with the bracket to define a unitary construction.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. An appliance (10), comprising:
a vacuum insulated door (12) coupled to a cabinet (14), the vacuum insulated door (12) including a wrapper (16) and a liner (18); and
a hinge assembly (20) operably coupled to the vacuum insulated door (12) and the cabinet (14), the hinge assembly (20) including:
a hinge plate (22) operably coupled to the cabinet (14) and defining an aperture (24);
a bracket (26) coupled to the wrapper (16) of the vacuum insulated door (12) and including a body (28) and a receiving member (30) defining a channel (34); and
a pin (36) disposed within the aperture (24) of the hinge plate (22) and positioned within the channel (34) of the receiving member (30) to operably couple the bracket (26) to the hinge plate (22)
**characterized in that** the receiving member (30) extends along a side of the body (28) of the bracket (26).

2. The appliance (10) of claim 1, wherein the receiving member (30) is welded to the body (28) of the bracket (26) and wherein the body (28) of the bracket (26) is welded to the wrapper (16).

3. The appliance (10) of either one of claims 1 or 2, wherein the hinge plate (22) further includes a bushing (90) defining an opening (96), and wherein the pin (36) is disposed within the opening (96).

4. The appliance (10) of claim 3, wherein the bushing (90) is disposed within the channel (34) of the receiving member (30).

5. The appliance (10) of claim 3, wherein the bushing (90) is disposed within the aperture (24) of the hinge plate (22).

6. The appliance (10) of claim 3, wherein the pin (36) includes a bearing flange (110).

7. The appliance (10) of claim 6, wherein the bearing flange (110) of the pin (36) is operably coupled to a perimeter edge (94) of the receiving member (30), and wherein the pin (36) is rotatably coupled with the receiving member (30).

8. The appliance (10) of either one of claims 6 or 7, wherein the bearing flange (110) is operably and rotatably coupled to the bushing (90).

9. The appliance (10) of claim 1, wherein the pin (36) is fixed relative to the bracket (26) and rotatably coupled within the aperture (24) of the hinge plate (22).

10. The appliance (10) of claim 3, wherein the bushing (90) is positioned between the pin (36) and the hinge plate (22), and wherein the pin (36) is rotatable within the bushing (90) relative to the hinge plate (22).

11. The appliance (10) of any one of claims 1-10, wherein the hinge plate (22) is coupled to the cabinet (14) via fasteners (74).

12. The appliance (10) of any one of claims 1-11, wherein the vacuum insulated door (12) is coupled to the cabinet (14) via the hinge assembly (20).

13. The appliance (10) of any one of claims 1-12, wherein the pin (36) is welded to the body (28) of the bracket (26).
